# EUROPEAN PATENT SPECIFICATION

(11) **EP 2 613 420 B1**
(45) Date of publication and mention of the grant of the patent: **06.03.2019**
(21) Application number: 11843354.9
(22) Date of filing: 15.11.2011
(51) Int. Cl.: H02J 7/00, B60L 11/18, H01M 10/44, H01M 10/46

(54) **CHARGE CONTROL DEVICE FOR ELECTRIC VEHICLE**
LADESTEUERUNGSVORRICHTUNG FÜR ELEKTROFAHRZEUGE
DISPOSITIF DE COMMANDE DE CHARGE POUR VÉHICULE ÉLECTRIQUE

(30) Priority: 25.11.2010 JP 2010262326; 22.12.2010 JP 2010286724
(43) Date of publication of application: 10.07.2013
(73) Proprietor: Honda Motor Co., Ltd., 107-8556 Tokyo (JP)
(72) Inventor: KAWASAKI, Yuichi, Wako-shi 351-0193 Saitama (JP); TAMAKI, Kenji, Wako-shi 351-0193 Saitama (JP); NAKAMURA, Masanori, Wako-shi 351-0193 Saitama (JP); YANAGISAWA, Takeshi, Wako-shi 351-0193 Saitama (JP)
(74) Representative: Beder, Jens
(86) International application number: PCT/JP2011/076301
(87) International publication number: WO 2012/070432

(56) References cited:
- EP-A1- 2 110 923
- WO-A1-99/19959
- JP-A- 7 121 249
- JP-A- 2009 261 230
- JP-A- 2010 110 055
- JP-A- 2010 239 773
- JP-U- H0 674 044
- US-A1- 2004 130 292
- US-A1- 2009 115 375

## Description

### Technical Field

The present invention relates to a charge control device for an electric vehicle, and more particularly, to a charge control device for an electric vehicle capable of coping even with a case of connecting any one of a normal charger and a fast charger to a vehicle, and capable of making usability of a user satisfactory.

### Background Art

In an electric vehicle using a motor driven by voltage input from an electric accumulator (a battery) as a driving source, in a normal charger and a fast charger for charging the battery, supplied currents are different from each other. Accordingly, in order to use both with connection, a charge control device separately provided with a normal charger terminal and a fast charger terminal is used (Patent Literature 1).

### Citation List

### Patent Literature

Patent Literature 1: JP 3267039 B1
Patent Literature 2: WO 9919959 A1
Patent Literature 3: US 2004130292 A1
Patent Literature 4: EP 2110923 A1

### Summary of Invention

### Technical Problem

The charge control device disclosed in Patent Literature 1, 2, 3 or 4 can connect any one of the normal charger and the fast charger, which is convenient. However, charging terminals are separately provided only for the normal charger and the fast charger, the number of components is thereby increased, and thus a cost of the charge control device is increased. In addition, in an electric two-wheeled vehicle employing a form of mounting a charger, differently from four-wheeled vehicle, a disposition space is further restricted. Accordingly, considering the degree of freedom of layout, it is difficult to secure the mount space of the charger.

In addition, when the normal charging terminal and the fast charging terminal are separately provided, determination to select a terminal is necessary to connect a charging plug to the terminal, and thus it is thought that a user feels trouble. In addition, since the fast charger charges a battery using current larger than that of the normal charger, there are problems that the fast charger terminal with large capacity has to be used and a cost is raised. In addition, a charge control device of the related arts does not properly address the occurrence of a short circuit between the power lines that connect the charger to the battery.

Considering the technical problems of the related art, an object of the invention is to provide a charge control device for an electric vehicle capable of raising the degree of freedom of layout at the time of being mounted on the vehicle by reducing the number of components and capable of improving usability of a user.

### Solution to Problem

To achieve the above objects, the present invention, as defined in claim 1, has a first feature in that a charge control device for an electric vehicle that is connected to one of a normal charger or a fast charger that performs charging with power capacity higher than that of the normal charger by a charging coupler, and supplies power necessary for charging to a battery supplying current to a motor that is a driving source of the electric vehicle when the normal charger or the fast charger is connected by the charging coupler, wherein the normal charger is provided with a first charging circuit, wherein the fast charger is provided with a second charging circuit in parallel with the first charging circuit in addition to the first charging circuit, supplies one power with the same capacity as that of the normal charger out of powers necessary for fast charging from the first charging circuit, and supplies the other from the second charging circuit, wherein the charging coupler is provided with a first terminal connected to the first charging circuit and a second terminal connected to the second charging circuit, and wherein the first terminal serves as a common terminal connected to the first charging circuit of the normal charger and the fast charger, is connected in parallel with the second terminal, and is connected to the battery.

In another feature the charging coupler accommodates both of the first terminal and the second terminal.

In another feature the first charging circuit and the second charging circuit have the same rated power.

In another feature the first charging circuit and the second charging circuit have outputs of direct-current specifications together. The present invention has a fourth feature in that he charging coupler is provided with a temperature sensor for each of the first terminal and the second terminal.

The present invention has a second feature in that diodes connected in a forward direction with respect to voltage applied by the first charging circuit and second charging circuit are provided on power lines connected between the first terminal and the second terminal and the battery, respectively.

The present invention has a third feature in that the charge control device for an electric vehicle comprising: switching units that are disposed at a space to the charging coupler on output power lines of the first charging circuit and the second charging circuit; and a switching unit driving unit that outputs a driving signal of driving both of the switching units or only the switching unit on the output power line of the first charging circuit according to whether any one of the fast charger or normal charger is connected to the charging coupler, and inhibits the outputting of the driving signal so as not to drive the switching units when both of the fast charger and normal charger are not connected to the charging coupler.

The present invention has a fourth feature in that the charge control device for an electric vehicle comprising: a reference voltage forming unit that forms reference voltage different according to whether any one of the fast charger or normal charger is connected to the charging coupler; and an abnormal voltage forming unit that forms abnormal voltage different from the reference voltage when both of the fast charger or normal charger are not connected to the charging coupler, wherein the switching unit driving unit drives the switching units when detecting the reference voltage, and does not drive the switching units when detecting the abnormal voltage.

The present invention has a fifth feature in that the charge control device for an electric vehicle comprising: a contactor that is disposed on power lines connected between the first terminal and the second terminal and the battery; a reference voltage forming unit that forms reference voltage different according to whether any one of the fast charger or normal charger is connected to the charging coupler; and a battery management unit that outputs a reference voltage detection signal when detecting the reference voltage, to turn on the contact by supply of the reference voltage detection signal.

Further in the first feature, the first terminal has a plus side power line and a minus side power line, wherein the second terminal has a plus side power line and a minus side power line, and wherein the charge control device for electric vehicle includes a contactor that is disposed on power lines connected between the first terminal and the second terminal and the battery, a detection circuit that detects a short circuit between the plus side power line and the minus side power line of the first terminal, a short circuit between the plus side power line of the first terminal and the minus side power line of the second terminal, a short circuit between the plus side power line and the minus side power line of the second terminal, a short circuit between the plus side power line of the second terminal and the minus side power line of the first terminal, and a contactor opening and closing unit that turns off the contactor in response to a short-circuit detection signal output when the detection circuit detects the short circuit.

The present invention has a sixth feature in that the detection circuit including a resistor that connects positive side power lines connected to the first terminal and the second terminal of the power lines connected between the first terminal and the second terminal and the battery, a resistor that connects negative side power lines connected to the first terminal and the second terminal, and a photo-coupler that is formed of a light emitting element connected in parallel with the power line connected to the first terminal, and a light receiving element provided as a pair with the light emitting element, wherein the contactor opening and closing unit turns off the contactor in response to a turning-on operation of the light emitting element.

The present invention has a seventh feature in that when the short circuit is detected by the detection circuit, alarm units based on an indicator or a speaker is operated.

### Advantageous Effects of Invention

According to the first feature, a normal charger is provided with a first charging circuit, a fast charger is provided with a second charging circuit in parallel with the first charging circuit in addition to the first charging circuit, supplies one power with the same capacity as that of the normal charger out of powers necessary for fast charging from the first charging circuit, and supplies the other from the second charging circuit, a charging coupler is provided with a first terminal connected to the first charging circuit and a second terminal connected to the second charging circuit, and the first terminal serves as a common terminal connected to the first charging circuit of the normal charger and the fast charger, is connected in parallel with the second terminal, and is connected to a battery. Therefore, it is possible to lower the power capacity of the first terminal and the second terminal, it is possible to reduce a cost. In addition, even in any case of normal charging and fast charging, it is possible to use a common charging coupler. Accordingly, even when any one of the normal charger and the fast charger is used, it is enough for a user to connect a single charging coupler, so that complication of an operation is resolved and it is possible to prevent the charge control device from being large.

According to another feature, when the charging connector is mounted on a vehicle, a space or the number of processes for individually installing both of the normal charger and the fast charger is not necessary.

According to another feature, even in a case of fast charging, it may be a charging coupler including a terminal with low capacity. That is, since the first terminal and the second terminal may be commonly used as normal charging with low capacity, improvement of general versatility may be expected.

According to another feature, even in any case of normal charging and fast charging, it is not necessary to provide an AC-DC converter on a battery side from the charging coupler, that is, on a vehicle side.

According to the second feature, even in a fast charger provided with a first charging circuit and a second charging circuit and provided with a plurality of sets of power lines, it is possible to measure a temperature of a terminal connected to each power line, and it is possible to detect a temperature very suitable to reduce an influence of a high temperature acting on the charging connector.

According to the third feature, even when the charging coupler is detached, battery voltage is not represented between the charging coupler and the battery by providing a diode.

According to the fourth and fifth features, even when a charge start operation is performed before the charging coupler is connected after a commercial power supply is connected to the charger side as charging, the switching unit does not perform an turning-on operation, and the output voltage of the charger is not represented on the charger side of the first terminal and the second terminal of the charging coupler.

According to the sixth feature, the battery management unit turns on the contactor when the reference voltage is detected. Accordingly, when the charging coupler deviates during charging, the contactor is turned off, and the connection between the first terminal and the second terminal and the battery is cut off.

According to the first and seventh features, the contactor may be turned off, when a short circuit occurs between the plus side power line and the minus side power line of the first terminal, between the plus side power line of the first terminal and the minus side power line of the second terminal, between the plus side power line and the minus side power line of the second terminal, and between the plus side power line of the second terminal and the minus side power line of the first terminal.

According to the eighth feature, it is possible to effectively notify the occurrence of the short circuit between the first terminal and the second terminal to a rider of a vehicle.

### Brief Description of Drawings

Fig. 1 is a block diagram illustrating a configuration of a charge control device according to an example with purely illustrative purposes.
Fig. 2 is a left side view of an electric vehicle provided with a charging coupler and a charge control device according to an embodiment of the invention.
Fig. 3 is a perspective view of a socket of a charging coupler provided with a thermistor.
Fig. 4 is a front view of the socket.
Fig. 5 is a rear view of the socket.
Fig. 6 is a cross-sectional view at an A-A position of Fig. 5.
Fig. 7 is a block diagram illustrating a charge control device according to an embodiment of the invention.
Fig. 8 is a block diagram illustrating a main unit function of a controller for outputting a driving signal of an FET.
Fig. 9 is a block diagram illustrating a main unit function of a PDU for cutting off a contactor.

### Description of Embodiments

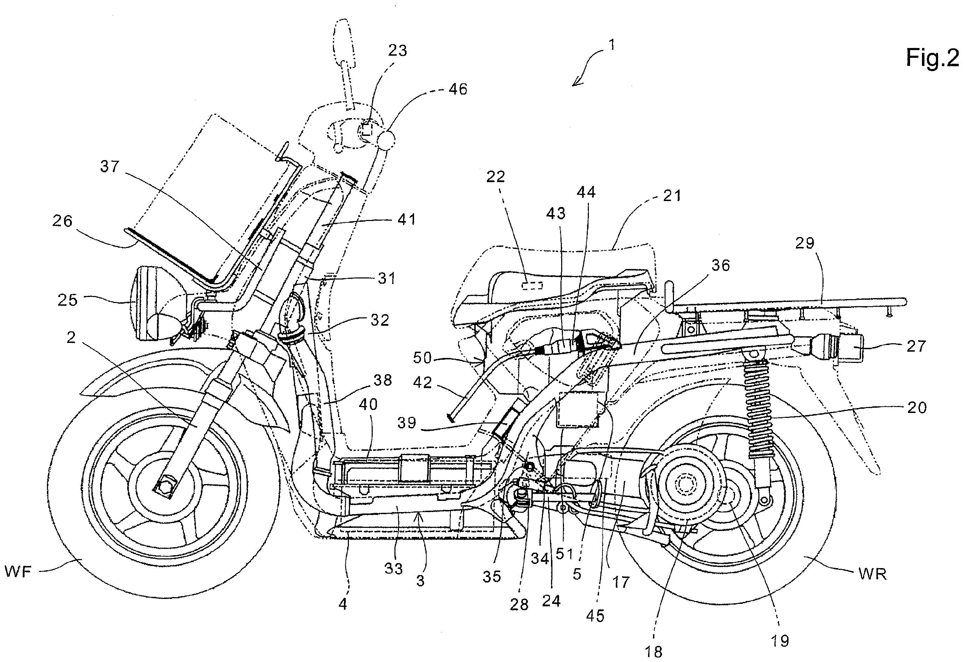

Hereinafter, embodiments of the invention will be described with reference to the drawings. Fig. 2 is a left side view of an electric vehicle provided with a charge control device according to an embodiment of the invention. An electric vehicle 1 is a scooter-type two-wheeled vehicle having a low floor, and each constituent portion is directly mounted on a vehicle body frame 3 or indirectly through the other member. The vehicle body frame 3 includes a head pipe 31, a front frame portion 32, a leading end of which is joined to the head pipe 31 and a trailing end of which extends downward, a pair of main frame portions 33 that are branched from the front frame portion 32 to the left and right in a vehicle body width direction and extend toward the rear of the vehicle body, and a rear frame portion 36 that extends from the main frame portion 33 to the upper rear of the vehicle body.

A front fork 2 that supports a front wheel WF is steerably supported by the head pipe 31. A steering wheel 46 having an accelerator grip is connected to an upper portion of a steering shaft 41 extending upward from the front fork 2 and supported by the head pipe 31. The steering wheel 46 is provided with a throttle sensor 23 that detects a rotation angle of the accelerator grip, that is, an accelerator pedal position.

A bracket 37 formed of a pipe is coupled with a front portion of the head pipe 31. A head light 25 is mounted on a front end portion of the bracket 37, and a front carrier 26 that is supported by the bracket 37 is provided upside the head light 25.

A bracket 34 that extends toward the rear of the vehicle body is joined with a middle area of the vehicle body frame 3 between the main frame portion 33 and the rear frame portion 36. The bracket 34 is provided with a pivot shaft 35 that extends in the vehicle body width direction, and a swing arm 17 is supported swingably up and down by the pivot shaft 35. The swing arm 17 is provided with a motor 18 as a vehicle driving source. Power of the motor 18 is transferred to a rear wheel vehicle shaft 19, and drives a rear wheel WR supported by the rear wheel vehicle shaft 19. A housing including the rear wheel vehicle shaft 19 and the rear frame portion 36 are connected by a rear suspension 20.

The bracket 34 is provided with a side stand 24 that supports the vehicle body during stopping of the vehicle. The side stand 24 has a side stand switch 28 that outputs a detection signal when the side stand 24 is housed at a predetermined position.

A main battery 4 with high voltage (for example, rated 72 V) formed of a plurality of battery cells is mounted on the main frame portion 33, and the upper portion of the main battery 4 is covered with a cover 40. An air introduction pipe 38 is connected to the front portion of the main battery 4, and an intake fan 39 is provided at the rear portion of the main battery 4. The air is introduced from the air introduction pipe 38 to the main battery 4 by the intake fan 39, and the air cools the main battery 4 and then is discharged to the rear of the vehicle body. The air may be introduced to the air introduction pipe 38 through an air cleaner (not illustrated).

A socket 44, to which a plug 43 of a charging cable 42 extending from a charger (to be described below) charging the main battery 4 is connectable, is provided above the rear frame portion 36. A rear carrier 29 and a taillight 27 are further provided at the rear frame portion 36.

A luggage compartment 50 is provided between a pair of left and right rear frame portions 36, and a sub-battery 5 with low voltage (for example, rated 12 V) charged by the main battery 4 is accommodated in a luggage compartment bottom 51 protruding downward from the luggage compartment 50. The swing arm 17 is provided with a power drive unit (PDU) 45 that controls the motor 18.

A driver seat 21 also serving as a cover of the luggage compartment 50 is provided above the luggage compartment 50, and the driver seat 21 is provided with a seat switch 22 that is operated when a driver sits on a seat to output a seating signal.

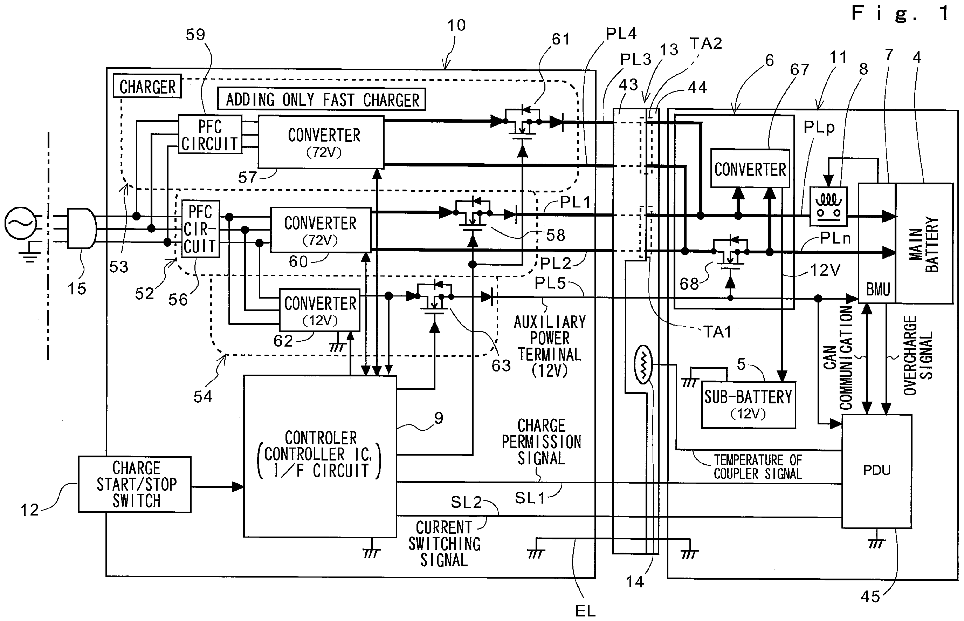

Fig. 1 is a block diagram illustrating a configuration of a charge control device. Fig. 1 illustrates an example in which a faster charger as a charger 10 is connected to a power supply device 11. The charge control device includes the charger 10, the power supply device 11 on the electric vehicle 1 side, a charging coupler (hereinafter, may be merely referred to as a coupler) 13 connecting the charger 10 and the power supply device 11 to each other. The charging coupler 13 includes the plug 43 connected to the charger 10 side and the socket 44 provided on the electric vehicle 1 side, and the socket 44 is provided with a thermistor 14 as a temperature sensor. A specific layout of the thermistor 14 in the socket 44 will be described below.

The charger 10 and the power supply device 11 are connected by first power lines PL1 and PL2, second power lines PL3 and PL4, an auxiliary power line PL5, signal lines SL1 and SL2, and an earth line EL, through the charging coupler 13. The power lines PL1 and PL3 are plus lines, and the power lines PL2 and PL4 are minus lines. The charging coupler 13 is provided with a normal charging terminal (a first terminal) TA1 and a fast charging terminal (a second terminal) TA2. The first terminal TA1 connects the first power lines PL1 and PL2 to a down regulator 6 when the plug 43 is connected to the socket 44. The second terminal TA2 connects the second power lines PL3 and PL4 to the down regulator 6 when the plug 43 is connected to the socket 44.

The charger 10 includes, for example, a 2-system first charging power generating unit (a first charging circuit) 52 that is connected to an AC plug 15 connected to a commercial AC power system, a second charging power generating unit (a second charging circuit) 53, and an auxiliary power generating unit 54. In addition, the charger 10 is provided with a controller 9 as a charge control unit that controls powers of the first charging power generating unit 52, the second charging power generating unit 53, and the auxiliary power generating unit 54. The charge control unit 9 includes a controller IC and an interface (I/F) circuit. The charge control unit 9 is connected to a charge start/stop switch 12.

As illustrated in Fig. 1, the charger 10 configured as the faster charger is provided with the first charging power generating unit 52, the second charging power generating unit 53, and the auxiliary power generating unit 54, as charging power generating units. When the charger 10 is configured as the normal charger, the charger 10 is not provided with the second charging power generating unit 53, and is provided with only the first charging power generating unit 52 and the auxiliary power generating unit 54. The first charging power generating unit 52 and the second charging power generating unit 53 are configured with the same voltage and power capacity together (72 V/15 A).

The first charging power generating unit 52 includes a PFC circuit 56 as a power factor improvement circuit connected to the AC plug 15, a converter 60 that is connected to the output side of the PFC circuit 56, and an FET 58 that controls the output of the converter 60. The second charging power generating unit 53 includes a PFC circuit 59, a converter 57 that is connected to the output side of the PFC circuit 59, and an FET 61 that controls the output of the converter 57.

Similarly, the auxiliary power generating unit 54 includes a converter 62 that is connected to the output side of the PFC circuit 56, and an FET 63 that controls the output of the converter 62. The converters 60 and 57 generate DC voltage of, for example, 72 V, and the converter 62 generates low voltage (for example, DC 12 V) usable as control power.

The power supply device 11 provided on the vehicle side is provided with a down regulator 6 and the main battery 4, to which the first power lines PL1 and PL2 and the second power lines PL3 and PL4 are led. In addition, the main battery 4 is provided with a battery management unit (BMU) 7, and a vehicle side control unit (PDU) 45 that controls the charger 10. The DC output voltage of the main battery 4 is converted into 3-phase AC voltage through an inverter circuit (not illustrated) provided in the PDU 45, and is applied to the motor 18 (see Fig. 2) that is a vehicle driving source.

On the power supply device 11, the positive side power lines PL1 and PL3 and the negative side power lines PL2 and PL4 introduced through the first terminal TA1 and the second terminal TA2 of the charging coupler 13 are integrated into a common circuit portion each formed of one plus (positive side) power line PLp and one minus (negative side) line PLn. A contactor 8 is provided on the integrated plus (positive side) line PLp.

The down regulator 6 is provided with a converter 67 that is connected to the power lines PLp and PLn in parallel, and an FET 68 that is connected to the power line PLn in series. The converter 67 converts the input voltage (72 V) into, for example, charging voltage of the sub-battery 5, and outputs the voltage.

The BMU 7 monitors a charge state of the main battery 4. The PDU 45 and the BMU 7 are connected by a CAN communication line, and the charge state (overcharge information or the like) of the main battery 4 or control information of the main battery 4 according thereto is transmitted and received. In addition, a signal for turning on or off the contactor 8 may be transmitted from the PDU 45 to the BMU 7 through the CAN communication line. A signal line other than the CAN communication line may be used. Detection information of the thermistor 14, that is, a temperature of the coupler 13 detected by the thermistor 14 is input to the PDU 45. The PDU 45 and the charge control unit 9 of the charger 10 are connected by the signal lines SL1 and SL2.

In order to charge the main battery 4 by the charger 10, the AC plug 15 is connected to an AC outlet (an output unit of a commercial power system). Accordingly, the input voltage from the AC plug 15 is converted into predetermined DC voltage (for example, 12 V) by the converter 62, and is applied to the charge control unit 9. When the charge start/stop switch 12 is switched to the charge start side, the charge control unit 9 inputs a gate signal to the FET 63 of the auxiliary power generating unit 54. Accordingly, the auxiliary power voltage is applied to the power supply device 11 through the power line PL5. The FET 68 of the down regulator 6, the BMU 7, and PDU 45 are biased by the auxiliary power voltage (12 V).

The PDU 45 communicates with the BMU 7 to recognize the charge state of the main battery 4, and inputs a charge permission signal to the charge control unit 9 through the signal line SL1 if charge is possible. When the charge permission signal is input, the charge control unit 9 inputs a gate signal to each of the FETs 58 and 61 of the first charging power generating unit 52 and the second charging power generating unit 53 to generate charging power (for example, voltage 72 V). On-time duties of FETs 58 and 61 are controlled by a state of the main battery 4 input from the PDU 45 to the charge control unit 9.

The voltage from the first charging power generating unit 52 and the second charging power generating unit 53 is applied to the main battery 4 through the contactor 8, and the main battery 4 is charged. The voltage from the first charging power generating unit 52 and the second charging power generating unit 53 drops down into, for example, 12 V by the converter 67 in the down regulator 6, and is used to charge the sub-battery 5. In addition, the voltage dropped down by the converter 67 may be applied to auxiliary machines including the head light 25 or a lamp such as a winker lamp, as well as applied to charge the sub-battery 5.

The temperature information of the charging coupler 13 detected by the thermistor 14 is input to the PDU 45, and the PDU 45 determines whether or not the temperature of the charging coupler 13 reaches a predetermined high temperature using a function of a microcomputer provided therein. When it is determined that the charging coupler 13 reaches the predetermined high temperature, the PDU 45 transmits an instruction (a current switching signal) of decreasing the charging voltage to the charge control unit 9 through the signal line SL2. The charge control unit 9 receiving the instruction outputs a control signal of reducing only the charging current while keeping the charging voltage, to the converter 57 or 60. When the charge amount of the main battery 4 is sufficient, the charging may be stopped by causing the on-time duties of the FETs 58 and 61 to be zero. In such a manner, it is possible to suppress overheating in the socket 44. The PDU 45 has a temperature information determination function, and a communication function for transmitting the current switching signal to the charge control unit 9 using the signal line SL2.

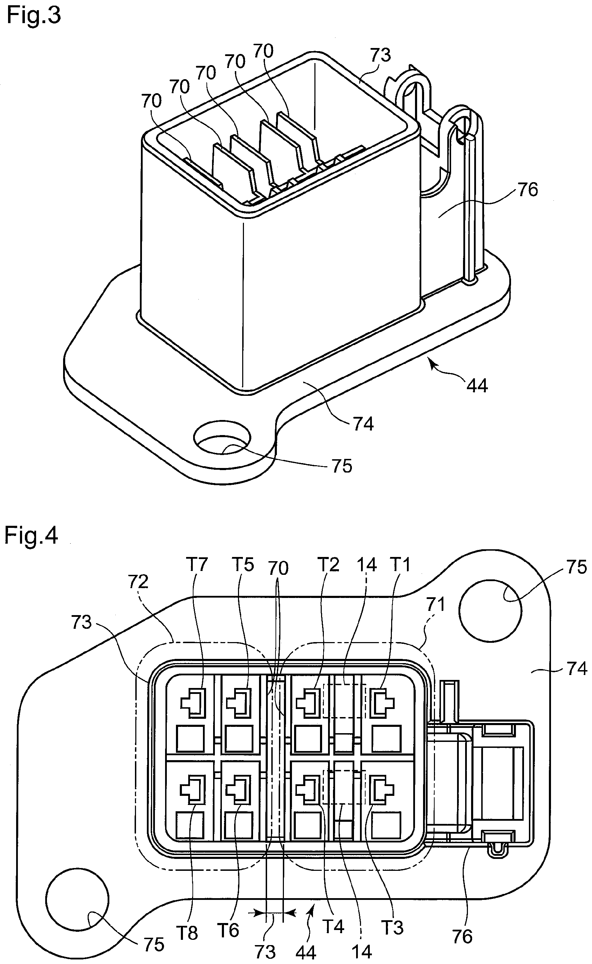

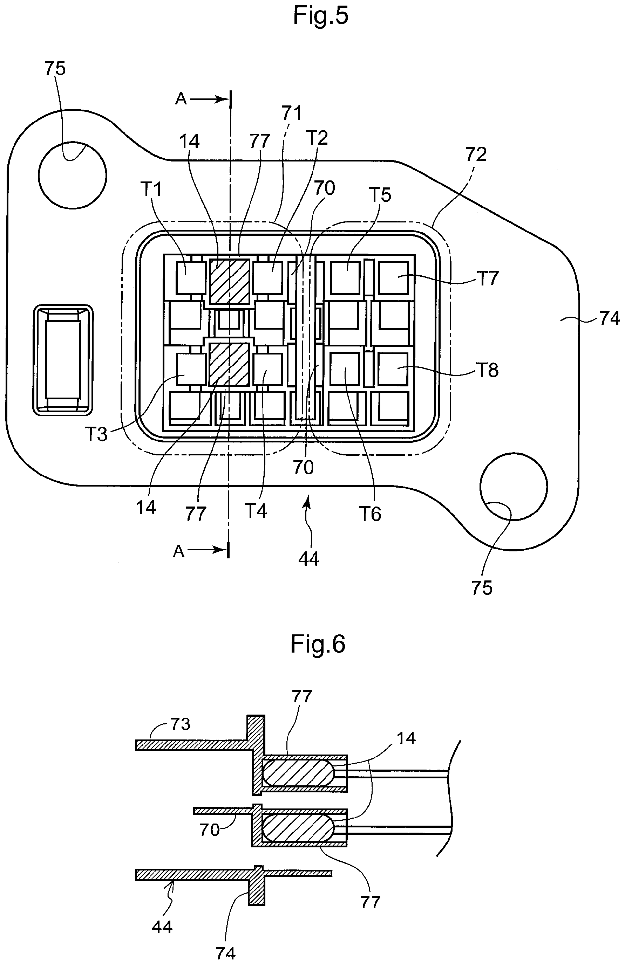

Disposition of the thermistor 14 will be described. Fig. 3 is a perspective view of the socket 44 of the charging coupler 13 provided with the thermistor 14, Fig. 4 is a front view of the socket 44, and Fig. 5 is a rear view of the socket 44. The socket 44 has terminals T1 to T8. The terminals T1 and T3 are power line terminals connected to the plus power lines PL1 and PL3 extending toward the vehicle, respectively. The terminals T2 and T4 are connected to the minus power lines PL2 and PL4 extending toward the vehicle, respectively. The power line terminals T1 to T4 secure general versatility using the same dimension and electric rating (rated current).

Meanwhile, the terminals T5 and T8 are connected to the auxiliary power line PL5 extending toward the vehicle and the signal lines SL1, SL2, and EL3, respectively. The terminals are divided by insulating walls 70. As described above, the socket 44 is divided into a high voltage area 71 where the high voltage power line terminals T1 to T4 are disposed, and the low voltage area 72 where the auxiliary power terminal T5 and the signal terminals T6 to T8 are disposed.

As illustrated in Figs. 4 and 5 (in Fig. 4, represented by dotted lines), the thermistor 14 is provided between the plus power line terminal T1 and the minus power line terminal T2, in the high voltage area 71 where a temperature increase is higher than the low voltage area 72. In addition, in this example, two charging power generating units 52 and 53 are provided for fast charging, and thus another thermistor 14 is further provided between the plus power line terminal T3 and the minus power line terminal T4, in the high voltage area 71. As described above, by disposing the thermistor 14, as a temperature sensor, to be close to the power line terminal of the high voltage area 71, it is possible to obtain higher precision in temperature detection.

A gap (an insulating gap) 73 is provided between the high voltage area 71 and the low voltage area 72 including the signal line terminals T6 to T8. On both sides of the gap 73, that is, at a portion where the high voltage area 71 and the low voltage area 72 are confronted, an insulation wall 70 of the minus power line terminals T2 and T4 and an insulating wall 70 of the terminals T5 and T6 are positioned. By such disposition, the low voltage area 72 does not easily receive an influence of heat from the high voltage area 71 where the temperature increase is relatively large or an influence based on leak from the power line with respect to the signal line.

The socket 44 is provided with a flange 74 protruding from a circumferential wall portion 73 of the terminal accommodation portion to the outer circumference, and is fixed on the rear frame portion 36 of the vehicle body frame 3 by bolts or the like using two installation holes 75 and 75 provided in the flange 74. The bracket 76 provided throughout the circumferential wall portion 73 and the flange 74 forms a support portion of a shaft for pivotally supporting a cover (not illustrated) to be openable and closable, which is capable of covering the upside of the circumferential wall portion 73 of the terminal accommodation portion.

Fig. 6 is a cross-sectional view at an A-A position of Fig. 5. As illustrated in Fig. 6, the thermistors 14 and 14 are inserted into a space surrounded by the insulating wall 77 protruding downward (in Fig. 6, rightward) from the flange 74 of the socket 44, and are adhered and fixed by epoxy resin.

Hereinafter, operations of the invention will be described in division of a case where the normal charger is connected using the charging coupler 13 and a case where the fast charger is connected using the charging coupler 13.

First, a charging operation based on the charger 10 as the normal charger having no second charging power generating unit 53 will be described. After connecting the plug 43 of the charger 10 that is the normal charger to the socket 44 on the vehicle side, the AC plug 15 is connected to the commercial power supply (for example, in the normal charger, AC power supply 100 V). Thereafter, the charge start/stop switch 12 is turned on, and the charging operation is thereby started.

The controller 9 is set in advance to output the reference voltage (for example, 2 V) when the normal charger is connected, and the reference voltage is supplied to the PDU 45 on the vehicle side through the current switching signal SL2 by the turning-on of the charge start/stop switch 12. Accordingly, the PDU 45 (the vehicle side) can recognize that the normal charger is connected, and can perform the charge management of the main battery 4 according to the normal charging.

The voltage from the commercial power supply is subjected to power factor improvement in the PFC circuit 56, is converted into 72 V (3.2 A) that is the rated voltage of the main battery 4 by the converter 60, is supplied to the normal charger terminal TA1 through the FET 58, and is supplied to the main battery 4 through the power lines PLp and PLn, as the charging voltage. That is, when the charger 10 is the normal charger, the second charging power generating unit 53 is not present, and thus only the power of 3.2 A is supplied from only the first charging power generating unit 52 to the main battery 4.

Next, a charging operation based on the charger 10 as the fast charger provided with both of the first charging power generating unit 52 and the second charging power generating unit 53 will be described. After connecting the plug 43 of the charger 10 as the fast charger to the socket 44 on the vehicle side, the AC plug 15 is connected to the commercial power supply (for example, in the fast charger, AC power supply 200 V). In the case of the fast charger, the charger 10 is provided with the second charging power generating unit 53. Accordingly, the power from the commercial power supply is supplied from the first charging power generating unit 52 and the second charging power generating unit 53 to the first terminal TA1 that is the normal charging terminal and the second terminal TA2 that is the fast charging terminal, respectively. As described above, the first charging power generating unit 52 and the second charging power generating unit 53 have the same voltage and current rating. The reference voltage (for example, 5 V) representing that the fast charger is connected is supplied to the PDU 45 through the current switching signal SL2.

On the vehicle side, the power from the first charging power generating unit 52 is supplied from the first terminal TA1 (15 A), the power from the second charging power generating unit 53 is supplied from the second terminal TA2 (15 A), and the first terminal TA1 and the second terminal TA2 are connected in parallel with the main battery 4. Accordingly, in the main battery 4, the power of the sum value (30 A) of the currents supplied from the first terminal TA1 and the second terminal TA2 is supplied to the main battery 4 through the positive side power line PLp and the negative power line PLn. That is, the first terminal TA1 that is the normal charging terminal is considered as common use even when the fast charger is connected, and the power necessary for fast charging is supplied from the terminal.

In the embodiment, an example has been described in which the rating of the first charging power generating unit 52 in the normal charger and the rating of the second charging power generating unit 53 applied to the fast charger are the same, but the rating of only the first charging power generating unit 52 in the normal charger may be smaller than that of the fast charger.

In addition, in the embodiment, the thermistor 14 is disposed corresponding to each of the plurality of power line terminals, and thus the determination of the temperature may be performed by detecting the higher one of the detection values of both sensors or on the basis of an average value of both detection values. However, the invention is not limited thereto, and a single thermistor 14 may be the temperature sensor.

In addition, the thermistor 14 is provided in the socket 44 on the vehicle side, but may be provided between the positive and negative power line plug terminals provided in the plug 43 connected to the socket 44. However, in this case, the plug 43 and the socket 44 of the charging coupler 13 are provided with the connection line terminal of the thermistor 14. On the other hand, when the socket 44 is provided with the thermistor 14, the configuration of the charging coupler 13 is simple and satisfactory.

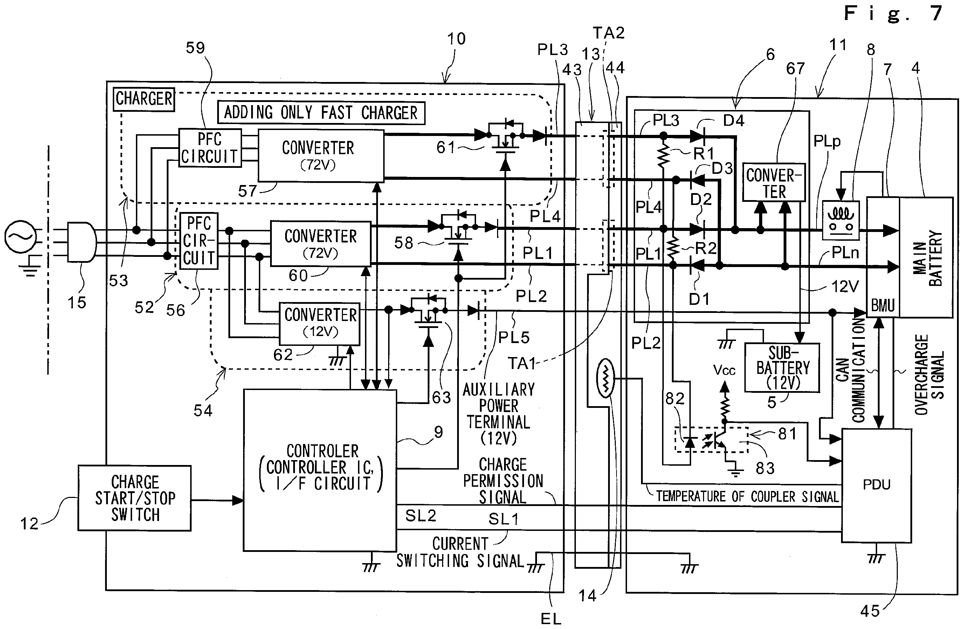

Next, a second embodiment of the charge control device will be described. Fig. 7 is a block diagram illustrating a main unit configuration of the charge control device according to the second embodiment, and the same reference numerals as those of Fig. 1 and signs are the same or equivalent portion.

In Fig. 7, diodes D1, D2, D3, and D4 are connected to portions drawn from the first terminal TA1 and the second terminal TA2 into the down regulator 6, of the power lines PL1, PL2, PL3, and PL4. The diodes D1 and D3 are connected in the backward direction from the charger 10 side to the power supply device 11 side on the vehicle side, and the diodes D2 and D4 are connected in the forward direction from the charger 10 side to the power supply device 11 side. The power line PL1 and the power line PL3 are connected between the first terminal TA1 and the second terminal TA2, and the diodes D2 and D4, through a resistor R1. Meanwhile, the power line PL2 and the power line PL4 are connected between the first terminal TA1 and the second terminal TA2, and the diodes D1 and D3, through a resistor R2.

The power line PL1 and the power line PL2 are connected to the input side of the photo-coupler 81, that is, the light emitting diode 82, at a portion where the resistors R1 and R2 are connected. The output side of the photo-coupler 81, that is, a collector of the photo-transistor 83 is connected to the PDU 45 and inputs a detection signal to the PDU 45.

According to the charge control device illustrated in Fig. 7, even if the contactor 8 is connected (is turned on), the voltage of the main battery 4 is not present at the first terminal TA1 and the second terminal TA2 on the socket 44 side by the diodes D1 to D4. In addition, on the charger 10 side, even if the AC plug 15 is connected to the commercial power supply, and even when the charge start/stop switch 12 is erroneously turned on when the coupler 13 is not connected, the charge permission signal does not arrive from the PDU 45 on the vehicle side. Accordingly, the FETs 58 and 61 do not perform an on-operation, and the output voltage of the charger 10 is not present at the first terminal TA1 and the second terminal TA2 on the plug 43 side.

The charge control device illustrated in Fig. 7 includes a safe plan when the coupler 13 deviates during charging. A function of turning off the FETs 58 and 61 is provided in the controller 9 on the charger 10 side, and a function of cutting off the contactor 8 is provided in the PDU 45 on the vehicle side, when there is a case where the coupler 13 deviates after the charge operation start, that is, after the coupler 13 is connected, the AC plug 15 is connected to the commercial power supply, and the charge start/stop switch 12 is turned on.

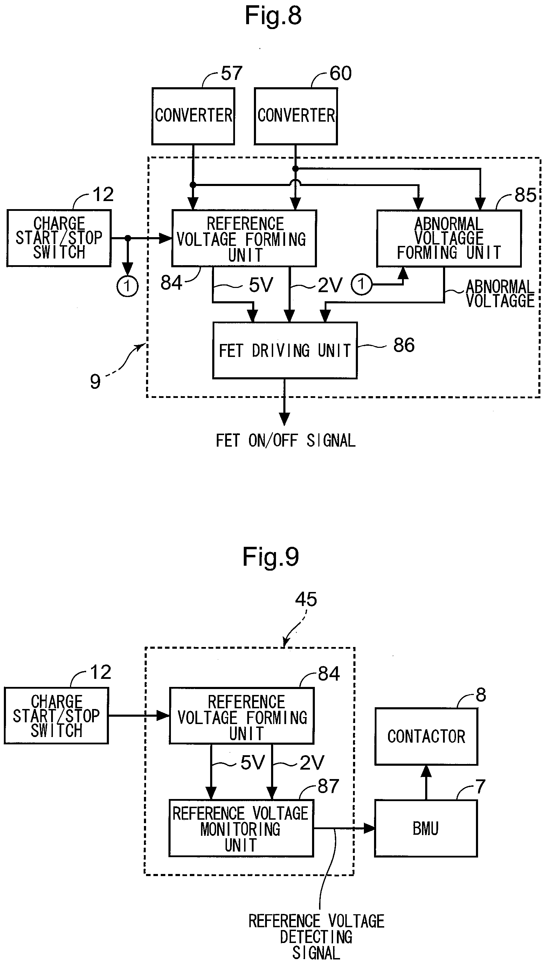

Fig. 8 is a block diagram illustrating a main unit function of the controller 9 for outputting a driving signal of the FET. The controller 9 has a reference voltage forming unit 84 that forms each corresponding reference voltage according to whether the charger 10 is any of the normal charger or the fast charger, when the AC plug 15 is connected to the commercial power supply and the charge start/stop switch 12 is turned on. For example, the reference voltage of 2 V is formed in the normal charger, and the reference voltage of 5 V is formed in the fast charger. In addition, the controller 9 has an abnormal voltage forming unit 85 that forms an abnormal voltage when the charging coupler 13 deviates during charging, separately from the reference voltage of the normal charger and the fast charger. For example, a voltage value exceeding 5 V more than an expected value is formed as abnormal voltage. When the charge start/stop switch 12 is not turned on, the control controller 9 is not operated, and the reference voltage or the abnormal voltage is not formed.

An FET driving unit 86 as a switching unit driving unit monitors the voltages output from the reference voltage forming unit 84 and the abnormal voltage forming unit 85. When the reference voltage of 2 V is detected, the FET 58 is turned on. When the reference voltage of 5 V is detected, both of the FET 58 and the FET 61 are turned on. When the abnormal voltage, that is, the voltage value exceeding 5 V more than the expected value is detected, it is recognized that the coupler 13 deviates in a state where the charge start/stop switch 12 is turned on, and the FET 58 is turned off (in the fast charger, also the FET 61 together).

Fig. 9 is a block diagram illustrating a main unit function of the PDU 45 for cutting off the contactor 8. When the AC plug 15 is connected to the commercial power supply and the charge start/stop switch 12 is turned on, the reference voltage formed by the reference voltage forming unit 84 of the controller 9 is input to the PDU 45 through the signal line SL2. The PDU 45 is provided with a voltage monitoring unit 87 that monitors the reference voltage, and inputs a reference voltage detection signal to the BMU 7 when the reference voltage is detected, and the BMU 7 turns on the contactor 8 in response to the reference voltage detection signal. When the reference voltage detection signal is not input, the BMU 7 turns off the contactor 8. When the coupler 13 deviates, the reference voltage is not input to the PDU 45, the reference voltage monitoring unit 87 does not generate the reference voltage detection signal, and thus the contactor 8 is turned off. In addition, when the reference voltage signal is input to the PDU 45, it is during charging, and thus driving force restriction is performed so as not to drive even when a driving signal is input to the PDU 45 side.

The diodes D1, D2, D3, and D4 provided in the power supply device 11 are connected to the input side of the photo-coupler 81, that is, the light emitting diode 82 through the resistors R1 and R2. At the normal time, the resistors R1 and R2 are interposed between the first power lines PL1 and PL2, and the second power lines PL3 and PL4, and thus current flowing in the light emitting diode 82 does not reach a current value operating the light emitting diode 82 (resistance values of the resistors R1 and R2 are selected such that the current value is less than operation current of the light emitting diode 82). Meanwhile, for example, when the power lines PL1 and PL2 or PL4 are short-circuited, or when the power lines PL3 and PL2 or PL4 are short-circuited, large current flows in the light emitting diode 82 without passing through the resistors R1 and R2. Accordingly, the light emitting diode 82 is driven, and the photo-transistor 83 detects light of the light emitting diode 82 and performs an on-operation.

The PDU 45 inputs a short-circuit detection signal to the BMU 7 in response to the on-operation of the photo-transistor 83. In response to the short-circuit detection signal, the BMU 7 operates to turn off the contactor 8, irrespective of the reference detection signal. Alternatively, when the short circuit is detected by the detection circuit, occurrence of the short circuit is notified to a rider by operating alarm units formed of an indicator or a speaker provided in a meter (not illustrated).

As described above, according to the second embodiment, an operation of cutting off the output voltage from the charger or the input voltage to the main battery 4 at the time of an electric-shock prevention function, an abnormal operation, and a breakdown may be brought.

### Reference Signs List

1: electric vehicle,
4: main battery,
5: sub-battery,
6: down regulator,
7: BMU,
9: charge control unit,
10: fast charger,
11: power supply device,
13: charging coupler,
14: thermistor (temperature sensor),
18: motor,
43: plug,
44: socket,
52: a first charging power generating unit (a first charging circuit),
53: a second charging power generating unit (a second charging circuit),
81: a photo-coupler.

## Claims

1. A charge control device for an electric vehicle, the charge control device including a normal charger and a fast charger so that the electric vehicle may be connected to one of the normal charger and the fast charger, the charge control device further including i) a charging coupler (13) and ii) a power supply device (11) on the side of the electric vehicle, the charging coupler (13) connecting the normal charger and the fast charger to the power supply device (11), the normal charger and the fast charger being configured to supply power necessary for charging a battery (4) that is provided in the power supply device (11) and that is configured to supply current to a motor (18) that is a driving source of the electric vehicle when the normal charger or the fast charger is connected by the charging coupler (13),
wherein the normal charger is provided with a first charging circuit (52),
wherein the fast charger is provided with:
i) the first charging circuit (52) and,
additionally,
ii) a second charging circuit (53) arranged in parallel with the first charging circuit (52),
the fast charger being configured to supply:
i) a first power supplied from the first charging circuit (52) and having the same capacity as the power supplied by the normal charger , and,
additionally,
ii) a second power supplied from the second charging circuit (53),
such that the fast charger can supply the first and second powers necessary for a fast charging of the battery (4) via the charging coupler (13), such that power capacity of the fast charger is higher than that of the normal charger,
**characterized in that** the charging coupler (13) is provided with a first terminal (TA1) connected to the first charging circuit (52) and a second terminal (TA2) connected to the second charging circuit (53),
**in that** the first terminal (TA1) serves as a common terminal connected to the first charging circuit (52) of the normal charger and the fast charger, is connected in parallel with the second terminal (TA2) in the power supply device (11), and is connected to the battery (4),
**in that** the first terminal (TA1) has a plus side power line (PL1) and a minus side power line (PL2),
**in that** the second terminal (TA2) has a plus side power line (PL3) and a minus side power line (PL4), and
**in that** the charge control device for electric vehicle includes:
- a contactor (8) that is disposed on power lines connected between the first terminal (TA1) and the second terminal (TA2) and the battery (4),
- a detection circuit that detects a short circuit between the plus side power line (PL1) and the minus side power line (PL2) of the first terminal (TA1), a short circuit between the plus side power line (PL1) of the first terminal (TA1) and the minus side power line (PL4) of the second terminal (TA2), a short circuit between the plus side power line (PL3) and the minus side power line (PL4) of the second terminal (TA2), a short circuit between the plus side power line (PL3) of the second terminal (TA2) and the minus side power line (PL2) of the first terminal (TA1), and
- a contactor opening and closing unit that turns off the contactor (8) in response to a short-circuit detection signal output when the detection circuit detects the short circuit.

2. The charge control device for the electric vehicle according to claim 1, wherein the charging coupler (13) is provided with a temperature sensor (14) for each of the first terminal (TA1) and the second terminal (TA2).

3. The charge control device for the electric vehicle according to any one of claims 1 to 2, wherein diodes (D1 to D4) connected in a forward direction with respect to voltage applied by the first charging circuit (52) and second charging circuit (53) are provided on power lines connected between the first terminal (TA1) and the second terminal (TA2) and the battery (4), respectively.

4. The charge control device for the electric vehicle according to any one of claims 1 to 3, further comprising:
switching units (58, 61) that are disposed at a space to the charging coupler (13) on output power lines of the first charging circuit (52) and the second charging circuit (53); and
a switching unit driving unit (86) that outputs a driving signal of driving both of the switching units (58, 61) or only the switching unit (58) on the output power line of the first charging circuit (52) according to whether any one of the fast charger or normal charger is connected to the charging coupler (13), and inhibits the outputting of the driving signal so as not to drive the switching units (58, 61) when both of the fast charger and normal charger are not connected to the charging coupler (13).

5. The charge control device for the electric vehicle according to claim 4, further comprising:
a reference voltage forming unit (84) that forms reference voltage different according to whether any one of the fast charger or normal charger is connected to the charging coupler (13); and
an abnormal voltage forming unit (85) that forms abnormal voltage different from the reference voltage when both of the fast charger or normal charger are not connected to the charging coupler (13),
wherein the switching unit driving unit (86) drives the switching units (58, 61) when detecting the reference voltage, and does not drive the switching units (58, 61) when detecting the abnormal voltage.

6. The charge control device for the electric vehicle according to any one of claims 1 to 3, further comprising:
a contactor (8) that is disposed on power lines connected between the first terminal (TA1) and the second terminal (TA2) and the battery (4);
a reference voltage forming unit (84) that forms reference voltage different according to whether any one of the fast charger or normal charger is connected to the charging coupler (13); and
a battery management unit (7) that outputs a reference voltage detection signal when detecting the reference voltage, to turn on the contact (8) by supply of the reference voltage detection signal.

7. The charge control device for the electric vehicle according to any one of claims 1 to 6, the detection circuit including
a resistor (R1) that connects positive side power lines connected to the first terminal (TA1) and the second terminal (TA2) of the power lines connected between the first terminal (TA1) and the second terminal (TA2) and the battery (4),
a resistor (R2) that connects negative side power lines connected to the first terminal (TA1) and the second terminal (TA2), and
a photo-coupler (81) that is formed of a light emitting element (82) connected in parallel with the power line connected to the first terminal (TA1), and a light receiving element (83) provided as a pair with the light emitting element (82),
wherein the contactor opening and closing unit turns off the contactor (8) in response to a turning-on operation of the light emitting element (83).

8. The charge control device for the electric vehicle according to any one of claims 1 to 7, wherein when the short circuit is detected by the detection circuit, alarm units based on an indicator or a speaker is operated.

## Patentansprüche

1. Ladesteuervorrichtung für ein Elektrofahrzeug, wobei die Ladesteuervorrichtung ein normales Ladegerät und ein Schnelladegerät umfasst, so dass das Elektrofahrzeug mit dem normalen Ladegerät oder dem Schnellladegerät verbunden werden kann, wobei die Ladesteuervorrichtung ferner umfasst: i) einen Ladekoppler (13) und ii) eine Stromversorgungsvorrichtung (11) auf der Seite des Elektrofahrzeugs, wobei der Ladekoppler (13) das normale Ladegerät und das Schnellladegerät mit der Stromversorgungsvorrichtung (11) verbindet, wobei das normale Ladegerät und das Schnellladegerät konfiguriert sind, um notwendige Leistung für das Laden einer Batterie (4), die in der Stromversorgungsvorrichtung (11) bereitgestellt wird, zu liefern, und die konfiguriert ist, um Strom an einen Motor (18), der eine Antriebsquelle des Elektrofahrzeugs ist, zu liefern, wenn das normale Ladegerät oder das Schnellladegerät durch den Ladekoppler (13) verbunden sind,
wobei das normale Ladegerät mit einer ersten Ladeschaltung (52) versehen ist,
wobei das Schnelladegerät versehen ist mit:
i) der ersten Ladeschaltung (52) und
zusätzlich
ii) einer zweiten Ladeschaltung (53) die parallel zu der ersten Ladeschaltung (52) eingerichtet ist,
wobei das Schnellladegerät konfiguriert ist, um zu liefern:
i) eine erste Leistung, die von der ersten Ladeschaltung (52) geliefert wird und die gleiche Kapazität wie die von dem normalen Ladegerät gelieferte Leistung hat, und
zusätzlich
ii) eine zweite Leistung, die von der zweiten Ladeschaltung (53) geliefert wird,
so dass das Schnellladegerät die ersten und zweiten Leistungen liefern kann, die für ein Schnelladen der Batterie (4) über den Leistungskoppler (13) notwendig sind, so dass die Leistungskapazität des Schnellladegeräts höher als die des normalen Ladegeräts ist,
**dadurch gekennzeichnet, dass** der Ladekoppler (13) mit einem ersten Anschluss (TA1), der mit der ersten Ladeschaltung (52) verbunden ist, und einem zweiten Anschluss (TA2), der mit der zweiten Ladeschaltung (53) verbunden ist, versehen ist,
dass der erste Anschluss (TA1) als ein gemeinsamer Anschluss dient, der mit der ersten Ladeschaltung (52) des normalen Ladegeräts und des Schnellladegeräts verbunden ist, parallel zu dem zweiten Anschluss (TA2) in der Stromversorgungsvorrichtung (11) verbunden ist und mit der Batterie (4) verbunden ist,
dass der erste Anschluss (TA1) eine Plus-Seiten-Stromleitung (PL1) und eine Minus-Seiten-Stromleitung (PL2) hat,
dass der zweite Anschluss (TA2) eine Plus-Seiten-Stromleitung (PL3) und eine Minus-Seiten-Stromleitung (PL4) hat,
dass die Ladesteuervorrichtung für das Elektrofahrzeug umfasst:
- einen Schalter (8), der auf Stromleitungen angeordnet ist, die zwischen dem ersten Anschluss (TA1) und dem zweiten Anschluss (TA2) und der Batterie (4) angeschlossen sind,
- eine Erfassungsschaltung, die einen Kurzschluss zwischen der Plus-Seiten-Stromleitung (PL1) und der Minus-Seiten-Stromleitung (PL2) des ersten Anschlusses (TA1), einen Kurzschluss zwischen der Plus-Seiten-Stromleitung (PL1) des ersten Anschlusses (TA1) und der Minus-Seiten-Stromleitung (PL4) des zweiten Anschlusses (TA2), einen Kurzschluss zwischen der Plus-Seiten-Stromleitung (PL3) und der Minus-Seiten-Stromleitung (PL4) des zweiten Anschlusses (TA2), einen Kurzschluss zwischen der Plus-Seiten-Stromleitung (PL3) des zweiten Anschlusses (TA2) und der Minus-Seiten-Stromleitung (PL2) des ersten Anschlusses (TA1) erfasst, und
- eine Schalteröffnungs- und Schließeinheit, die den Schalter (8) ansprechend auf ein Kurzschlusserfassungssignal, das ausgegeben wird, wenn die Erfassungsschaltung den Kurzschluss erfasst, ausschaltet.

2. Ladesteuervorrichtung für das Elektrofahrzeug nach Anspruch 1, wobei der Ladekoppler (13) für jeden des ersten Anschlusses (TA1) und des zweiten Anschlusses (TA2) mit einem Temperatursensor (14) versehen ist.

3. Ladesteuervorrichtung für das Elektrofahrzeug nach einem der Ansprüche 1 bis 2, wobei Dioden (D1 bis D4), die in Bezug auf eine von der ersten Ladeschaltung (52) und der zweiten Ladeschaltung (53) angelegte Spannung in einer Vorwärtsrichtung verbunden sind, auf Stromleitungen bereitgestellt sind, die jeweils zwischen dem ersten Anschluss (TA1) und dem zweiten Anschluss (TA2) und der Batterie (4) verbunden sind.

4. Ladesteuervorrichtung für das Elektrofahrzeug nach einem der Ansprüche 1 bis 3, die ferner aufweist:
Schalteinheiten (58, 61), die an einem Raum des Ladekopplers (13) auf Ausgangsstromleitungen der ersten Ladeschaltung (52) und der zweiten Ladeschaltung (53) angeordnet sind; und
eine Schalteinheitsansteuereinheit (86), die dementsprechend, ob das Schnellladegerät oder das normale Ladegerät mit dem Ladekoppler (13) verbunden ist, ein Ansteuersignal zum Ansteuern beider Schalteinheiten (58, 61) oder nur der Schalteinheit (58) auf der Ausgangsstromleitung der ersten Ladeschaltung (52) ausgibt, und die Ausgabe des Ansteuersignals unterbindet, um die Schalteinheiten (58, 61) nicht anzusteuern, wenn sowohl das Schnellladegerät als auch das normale Ladegerät nicht mit dem Ladekoppler (13) verbunden sind.

5. Ladesteuervorrichtung für das Elektrofahrzeug nach Anspruch 4, die ferner aufweist:
eine Referenzspannungserzeugungseinheit (84), die eine Referenzspannung erzeugt, die dementsprechend verschieden ist, ob das Schnellladegerät oder das normale Ladegerät mit dem Ladekoppler (13) verbunden ist; und
eine Erzeugungsvorrichtung (85) für eine unnormale Spannung, die eine unnormale Spannung erzeugt, die verschieden von der Referenzspannung ist, wenn sowohl das Schnellladegerät als auch das normale Ladegerät nicht mit dem Ladekoppler (13) verbunden sind,
wobei die Schalteinheitsansteuereinheit (86) die Schalteinheiten (58, 61) ansteuert, wenn die Referenzspannung erfasst wird, und die Schalteinheiten (58, 61) nicht ansteuert, wenn die unnormale Spannung erfasst wird.

6. Ladesteuervorrichtung für das Elektrofahrzeug nach einem der Ansprüche 1 bis 3, die ferner aufweist:
einen Schalter (8), der auf Stromleitungen angeordnet ist, die zwischen dem ersten Anschluss (TA1) und dem zweiten Anschluss (TA2) und der Batterie (4) verbunden sind;
eine Referenzspannungserzeugungseinheit (84), die eine Referenzspannung erzeugt, die dementsprechend verschieden ist, ob das Schnellladegerät oder das normale Ladegerät mit dem Ladekoppler (13) verbunden ist; und
eine Batterieverwaltungseinheit (7), die ein Referenzspannungserfassungssignal ausgibt, wenn die Referenzspannung erfasst wird, um den Kontakt (8) durch die Lieferung des Referenzspannungserfassungssignals einzuschalten.

7. Ladesteuervorrichtung für das Elektrofahrzeug nach einem der Ansprüche 1 bis 6, wobei die Erfassungsschaltung umfasst:
einen Widerstand (R1), der Stromleitungen der positiven Seite, die mit dem ersten Anschluss (TA1) und dem zweiten Anschluss (TA2) der Stromleitungen, die zwischen dem ersten Anschluss (TA1) und dem zweiten Anschluss (TA2) und der Batterie (4) verbunden sind, verbindet,
einen Widerstand (R2), der Stromleitungen der negativen Seite, die mit dem ersten Anschluss (TA1) und dem zweiten Anschluss (TA2) verbunden sind, verbindet, und
einen Fotokoppler (81), der aus einem lichtemittierenden Element (82), das parallel zu der Stromleitung mit dem ersten Anschluss (TA1) verbunden ist, und einem lichtempfangenden Element (823), das als ein Paar mit dem lichtemittierenden Element (82) bereitgestellt ist, verbunden ist,
wobei die Schalteröffnungs- und Schließeinheit den Schalter (8) ansprechend auf eine Einschaltbedienung des lichtemittierenden Elements (83) ausschaltet.

8. Ladesteuervorrichtung für das Elektrofahrzeug nach einem der Ansprüche 1 bis 7, wobei, wenn der Kurschluss von der Erfassungsschaltung erfasst wird, Alarmeinheiten basierend auf einer Anzeige oder einem Lautsprecher betrieben werden.

## Revendications

1. Dispositif de commande de charge pour un véhicule électrique, le dispositif de commande de charge incluant un chargeur normal et un chargeur rapide de sorte que le véhicule électrique peut être connecté à l'un du chargeur normal et du chargeur rapide, le dispositif de commande de charge incluant en outre i) un coupleur de chargement (13) et ii) un dispositif d'alimentation (11) sur le côté du véhicule électrique, le coupleur de chargement (13) connectant le chargeur normal et le chargeur rapide au dispositif d'alimentation (11), le chargeur normal et le chargeur rapide étant configurés pour fournir l'énergie nécessaire pour charger une batterie (4) qui est prévue dans le dispositif d'alimentation (11) et qui est configurée pour fournir du courant à un moteur (18) qui est une source d'entraînement du véhicule électrique lorsque le chargeur normal ou le chargeur rapide est connecté par le coupleur de chargement (13),
dans lequel le chargeur normal est doté d'un premier circuit de chargement (52),
dans lequel le chargeur rapide est doté de :
i) le premier circuit de chargement (52) et,
en outre,
ii) un second circuit de chargement (53) agencé en parallèle avec le premier circuit de chargement (52),
le chargeur rapide étant configuré pour fournir :
i) une première énergie fournie à partir du premier circuit de chargement (52) et ayant la même capacité que l'énergie fournie par le chargeur normal, et,
en outre,
ii) une seconde énergie fournie à partir du second circuit de chargement (53),
de telle manière que le chargeur rapide peut fournir les première et seconde énergies nécessaires pour un chargement rapide de la batterie (4) via le coupleur de chargement (13), de telle manière que la capacité énergétique du chargeur rapide est supérieure à celle du chargeur normal,
**caractérisé en ce que** le coupleur de chargement (13) est doté d'une première borne (TA1) connectée au premier circuit de chargement (52) et d'une seconde borne (TA2) connectée au second circuit de chargement (53),
**en ce que** la première borne (TA1) sert de borne commune connectée au premier circuit de chargement (52) du chargeur normal et du chargeur rapide, est connectée en parallèle avec la seconde borne (TA2) dans le dispositif d'alimentation (11), et est connectée à la batterie (4),
**en ce que** la première borne (TA1) a une ligne électrique côté plus (PL1) et une ligne électrique côté moins (PL2),
**en ce que** la seconde borne (TA2) a une ligne électrique côté plus (PL3) et une ligne électrique côté moins (PL4), et
**en ce que** le dispositif de commande de charge pour véhicule électrique inclut :
- un contacteur (8) qui est disposé sur des lignes électriques connectées entre la première borne (TA1) et la seconde borne (TA2) et la batterie (4),
- un circuit de détection qui détecte un court-circuit entre la ligne électrique côté plus (PL1) et la ligne électrique côté moins (PL2) de la première borne (TA1), un court-circuit entre la ligne électrique côté plus (PL1) de la première borne (TA1) et la ligne électrique côté moins (PL4) de la seconde borne (TA2), un court-circuit entre la ligne électrique côté plus (PL3) et la ligne électrique côté moins (PL4) de la seconde borne (TA2), un court-circuit entre la ligne électrique côté plus (PL3) de la seconde borne (TA2) et la ligne électrique côté moins (PL2) de la première borne (TA1), et
- une unité d'ouverture et de fermeture de contacteur qui éteint le contacteur (8) en réponse à une sortie de signal de détection de court-circuit lorsque le circuit de détection détecte le court-circuit.

2. Dispositif de commande de charge pour le véhicule électrique selon la revendication 1, dans lequel le coupleur de chargement (13) est doté d'un capteur de température (14) pour chacune de la première borne (TA1) et de la seconde borne (TA2).

3. Dispositif de commande de charge pour le véhicule électrique selon l'une quelconque des revendications 1 et 2, dans lequel des diodes (D1 à D4) connectées dans un sens direct par rapport à une tension appliquée par le premier circuit de chargement (52) et le second circuit de chargement (53) sont prévues sur des lignes électriques connectées entre la première borne (TA1) et la seconde borne (TA2) et la batterie (4), respectivement.

4. Dispositif de commande de charge pour le véhicule électrique selon l'une quelconque des revendications 1 à 3, comprenant en outre :
des unités de commutation (58, 61) qui sont disposées à un espace du coupleur de chargement (13) sur les lignes électriques de sortie du premier circuit de chargement (52) et du second circuit de chargement (53) ; et
une unité de pilotage d'unité de commutation (86) qui délivre en sortie un signal de pilotage destiné à piloter les deux unités de commutation (58, 61) ou uniquement l'unité de commutation (58) sur la ligne électrique de sortie du premier circuit de chargement (52) selon que l'un quelconque du chargeur rapide ou du chargeur normal est connecté au coupleur de chargement (13), et inhibe la délivrance en sortie du signal de pilotage de façon à ne pas piloter les unités de commutation (58, 61) lorsque ni le chargeur rapide ni le chargeur normal ne sont connectés au coupleur de chargement (13).

5. Dispositif de commande de charge pour le véhicule électrique selon la revendication 4, comprenant en outre :
une unité de formation de tension de référence (84) qui forme une tension de référence différente selon que l'un quelconque du chargeur rapide ou du chargeur normal est connecté au coupleur de chargement (13) ; et
une unité de formation de tension anormale (85) qui forme une tension anormale différente de la tension de référence lorsque ni le chargeur rapide ni le chargeur normal ne sont connectés au coupleur de chargement (13),
dans lequel l'unité de pilotage d'unité de commutation (86) pilote les unités de commutation (58, 61) lorsqu'elle détecte la tension de référence, et ne pilote pas les unités de commutation (58, 61) lorsqu'elle détecte la tension anormale.

6. Dispositif de commande de charge pour le véhicule électrique selon l'une quelconque des revendications 1 à 3, comprenant en outre :
un contacteur (8) qui est disposé sur des lignes électriques connectées entre la première borne (TA1) et la seconde borne (TA2) et la batterie (4) ;
une unité de formation de tension de référence (84) qui forme une tension de référence différente selon que l'un quelconque du chargeur rapide ou du chargeur normal est connecté au coupleur de chargement (13) ; et
une unité de gestion de batterie (7) qui délivre en sortie un signal de détection de tension de référence lorsqu'elle détecte la tension de référence, pour allumer le contact (8) par fourniture du signal de détection de tension de référence.

7. Dispositif de commande de charge pour le véhicule électrique selon l'une quelconque des revendications 1 à 6, le circuit de détection incluant
une résistance (R1) qui connecte les lignes électriques côté positif connectées à la première borne (TA1) et à la seconde borne (TA2) des lignes électriques connectées entre la première borne (TA1) et la seconde borne (TA2) et la batterie (4),
une résistance (R2) qui connecte les lignes électriques côté négatif connectées à la première borne (TA1) et à la seconde borne (TA2), et
un photo-coupleur (81) qui est formé d'un élément électroluminescent (82) connecté en parallèle avec la ligne électrique connectée à la première borne (TA1), et d'un élément récepteur de lumière (83) constituant une paire avec l'élément électroluminescent (82),
dans lequel l'unité d'ouverture et de fermeture de contacteur éteint le contacteur (8) en réponse à une opération d'allumage de l'élément électroluminescent (83).

8. Dispositif de commande de charge pour le véhicule électrique selon l'une quelconque des revendications 1 à 7, dans lequel lorsque le court-circuit est détecté par le circuit de détection, des unités d'alarme basées sur un voyant ou un haut-parleur est mis en opération.
